# FASCICULE DE BREVET EUROPEEN

(11) **EP 2 786 033 B1**
(45) Date de publication et mention de la délivrance du brevet: **21.09.2016**
(21) Numéro de dépôt: 12806600.8
(22) Date de dépôt: 29.11.2012
(51) Int. Cl.: F16D 13/64

(54) **DISQUE PORTE-GARNITURES A MOYENS DE PROGRESSIVITE EN MATERIAU ELASTOMERE**
REIBBELAGTRÄGER MIT FEDERUNGSMITTELN AUS ELASTOMER
FRICTION ELEMENTS SUPPORTING DISC WITH ELASTOMER RESILIENT MEANS

(30) Priorité: 01.12.2011 FR 1161042
(43) Date de publication de la demande: 08.10.2014
(73) Titulaire: Valeo Matériaux de Friction, 87000 Limoges (FR)
(72) Inventeur: ADAMCZAK, Loïc, F-81740 Roussac (FR); CROSLAND, Gérard, F-23300 La Souterraine (FR); DELAVENTE, Franck, F-87430 Verneuil Sur Vienne (FR); GUYOT, Daniel, F-87280 Limoges (FR); MAYSONNADE, Eliane, F-87310 St Laurent sur Gorre (FR)
(74) Mandataire: Cardon, Nicolas
(86) Numéro de dépôt international: PCT/FR2012/052757
(87) Numéro de publication internationale: WO 2013/079875

(56) Documents cités:
- EP-A1- 0 446 098
- EP-A1- 0 982 511
- EP-A2- 0 252 583
- EP-A2- 0 810 385
- WO-A1-91/10837
- DE-A1- 19 857 712
- GB-A- 2 384 034

## Description

### DOMAINE TECHNIQUE DE L'INVENTION

L'invention concerne un disque porte-garnitures dont les moyens de progressivité sont en matériau élastomère, un disque d'embrayage équipé d'un tel disque porte-garnitures et un embrayage pour véhicule automobile.

### ÉTAT DE LA TECHNIQUE

Un embrayage de véhicule automobile permet de sélectivement solidariser et désolidariser un arbre menant, généralement le vilebrequin d'un moteur, à au moins un arbre mené, généralement un arbre d'entrée d'une boîte de vitesse.

Un embrayage comporte un plateau de réaction destiné à être relié directement ou indirectement au volant moteur solidaire du vilebrequin, au moins un plateau de pression, au moins un disque d'embrayage, également appelé disque de friction, venant en prise avec l'arbre d'entrée de la boîte de vitesse, un carter solidaire du plateau de réaction, et des moyens d'actionnement. Les moyens d'actionnement sont aptes à actionner le plateau de pression afin de serrer le disque de friction entre les plateaux de pression et de réaction et transmettre ainsi le couple du volant moteur vers la boîte de vitesse.

Le disque de friction présente un moyeu destiné à être couplé en rotation à un arbre d'entrée d'une boîte de vitesse, des garnitures de friction adaptées à frotter contre les plateaux de pression et de réaction, classiquement en fonte, et un disque porte-garnitures fixé directement ou via un dispositif d'amortisseur de torsion sur le moyeu. Le disque porte-garnitures comporte des moyens de progressivité qui lui confèrent une élasticité axiale, notamment pour améliorer la répartition des efforts sur les garnitures et les plateaux. Les moyens de progressivité assurent en outre la progressivité de la transmission du couple lors du démarrage du véhicule et du passage des vitesses, contribuent au confort de conduite et limitent les bruits.

Dans l'art antérieur, il est connu des disques porte-garnitures pour disque d'embrayage équipés de moyens de progressivité en matériau élastomère. De tels dispositifs sont notamment décrit dans les documents FR 2 764 019, EP0982511*,* FR 2 871 538, FR 2 714 432 ou FR 2 887 605.

Ces disques d'embrayage comportent :
- deux éléments métalliques de support parallèles présentant une portion périphérique annulaire de support de garniture de friction et des languettes de liaison au disque d'embrayage ;
- deux garnitures de friction, adhérisées, surmoulées ou agrafées sur la face externe de leur élément de support respectif, et
- des moyens de progressivité en matière élastomère, formant ressort, interposés entre les éléments métalliques de support.

Par cette disposition, on réduit l'inertie de la friction d'embrayage, grâce au mode de fixation des garnitures de friction permettant de réduire l'épaisseur de celles-ci, tout en ayant une bonne progressivité lors du serrage des garnitures de friction entre les plateaux de pression et de réaction.

Toutefois, en cas de surcharge axiale d'embrayage couplée à une sollicitation thermique importante, l'élément de progressivité en matériau élastomère est soumis à des surpressions qui risquent de dégrader de manière irréversible la fonction de progressivité. Cette dégradation a pour conséquence de détériorer la progressivité de l'accouplement et peut même conduire à un défaut de transmission du couple si les moyens de progressivité ne présentent plus une élasticité suffisante.

De telles surcharges axiales d'embrayages peuvent notamment être provoquées par l'usure des garnitures de friction dans un embrayage du type normalement fermé, l'usure des garnitures ayant pour effet d'augmenter la charge du diaphragme. De telles surcharges d'embrayages peuvent également provenir de dysfonctionnements du procédé de pilotage dans le cas d'un embrayage du type normalement ouvert.

De plus, en fonctionnement, les supports métalliques sont soumis à des gradients thermiques entre leur périphérie radiale et leurs languettes de liaison au moyeu du disque d'embrayage. Or, ces gradients thermiques entraînent des déformations géométriques des supports, telles que des mises en cône ou des ondulations circonférentielles.

Les solutions de l'art antérieur ne sont donc pas pleinement satisfaisantes.

### OBJET DE L'INVENTION

L'invention vise à remédier à ces problèmes en proposant un disque porte-garnitures à moyens de progressivité en matériau élastomère qui soit particulièrement résistant aux surcharges d'embrayage.

A cet effet, et selon un premier aspect, l'invention propose un disque porte-garnitures pour disque d'embrayage comportant :
- deux éléments de support parallèles comprenant :
   - une portion périphérique annulaire présentant une face externe de réception d'une garniture de friction et une face interne coopérant avec des moyens de progressivité ; et
   - des moyens de liaison au disque d'embrayage, s'étendant radialement vers l'intérieur ;
- des moyens de progressivité en matière élastomère, formant ressort, interposés entre les faces internes des portions périphériques annulaires;
le disque porte-garnitures étant remarquable en ce qu'au moins l'un des éléments de support présente sur la face interne de sa portion périphérique annulaire des moyens de butée faisant saillie axialement vers l'autre élément de support de sorte à limiter la course de serrage des éléments de support l'un vers l'autre.

Ainsi, les moyens de butée limitent axialement la déformation élastique des moyens de progressivité en élastomère qui sont alors protégés en cas de surcharge.

Avantageusement, les moyens de butée forment également des moyens de rigidification axiale et circonférentielle desdits éléments de support permettant de limiter les déformations géométriques de éléments de support dues aux gradients thermiques.

Avantageusement, les moyens de butée sont agencés pour limiter la compression des moyens de progressivité au dessus de leur seuil de déformation rémanente. Pour obtenir un bon compromis entre l'efficacité de la progressivité et sa protection, les moyens de butée sont aptes à entrer en contact pour une course de serrage comprise entre 20 et 35 % de l'épaisseur axiale des moyens de progressivité.

De préférence, les moyens de butée sont agencés pour générer une raideur en compression axiale du disque porte-garnitures supérieure à 30000 kN/m.

Dans un mode de réalisation préféré, chaque élément de support présente sur sa face interne des moyens de butée faisant saillie axialement vers l'autre élément de support, lesdits moyens de butée de chacun des éléments de support étant disposés en vis-à-vis. Ce mode de réalisation est particulièrement avantageux en ce qu'il permet de rigidifier les deux éléments de support.

De préférence, les moyens de butée sont formés, de matière, par déformation des éléments de support. Ainsi, les moyens de butée n'augmentent pas l'inertie du disque porte-garnitures. Dans un autre mode de réalisation, les moyens de butée sont des éléments rapportés contre la surface interne d'au moins un élément de support.

Dans un mode de réalisation, les moyens de butée sont formés par des plots régulièrement répartis sur la circonférence de la portion périphérique annulaire d'au moins un élément de support. Ce mode de réalisation présente l'avantage de ne pas réduire de manière trop importante la surface de coopération des éléments de support avec les moyens de progressivité.

Dans un autre mode de réalisation, les moyens de butées sont formés par une pluralité d'éléments annulaires ou de segments annulaires de butée radialement répartis. De tels moyens de butée sont particulièrement avantageux en combinaison avec des moyens de progressivité comprenant une pluralité de cordon circulaires coaxiaux puisqu'ils permettent de réaliser les fonctions de butée et de progressivité de manière homogène sur tout le pourtour du disque porte-garnitures.

Dans un mode de réalisation, les moyens de progressivité comprennent une pluralité de cordons circulaires coaxiaux s'étendant radialement entre deux éléments annulaires ou deux segments annulaire de butée adjacents. Ainsi les éléments ou segments annulaires de butée permettent également de protéger les cordons de silicone contre la centrifugation.

Selon un deuxième aspect, l'invention concerne également un disque d'embrayage équipé d'un disque porte-garnitures selon le premier aspect de l'invention.

Enfin selon un troisième aspect, l'invention concerne un embrayage pour véhicule automobile comportant un disque d'embrayage selon le second aspect de l'invention.

### BRÈVE DESCRIPTION DES FIGURES

D'autres objets et avantages de l'invention apparaîtront au cours de la description qui suit, faite en référence aux dessins annexés, dans lesquels :
- la figure 1 est une vue éclatée, en perspective, d'un ensemble garnitures de friction/disque porte-garnitures selon un premier mode de réalisation de l'invention ;
- la figure 2 représente la face interne d'un élément de support selon le premier mode de réalisation de la figure 1 ;
- les figures 3 et 4 sont des vues en perspective de la face interne d'un élément de support respectivement selon un second et un troisième mode de réalisation de l'invention ;

- les figures 5 et 6 sont des vues détaillées de la face interne d'un élément de support selon deux variantes d'un quatrième mode de réalisation de l'invention ;
- les figures 7 et 8 sont des vues détaillées de la face externe de l'élément de support selon les deux variantes des figures 5 et 6 ;
- la figure 9 est une vue en coupe radiale d'une butée selon ledit quatrième mode de réalisation des figures 5 à 8 ;
- les figures 10a et 10b sont des vues en coupe radiale illustrant une garniture de friction selon l'invention respectivement en position débrayée et en position embrayée ;
- les figures 11 et 12 sont des vues en coupe radiale d'une garniture de friction selon deux variantes du mode de réalisation de la figure 1 ; et
- les figures 13, 14 et 15 illustrent des disques porte-garnitures selon un cinquième, sixième et septième mode de réalisation de l'invention.

### EXEMPLES DE RÉALISATION

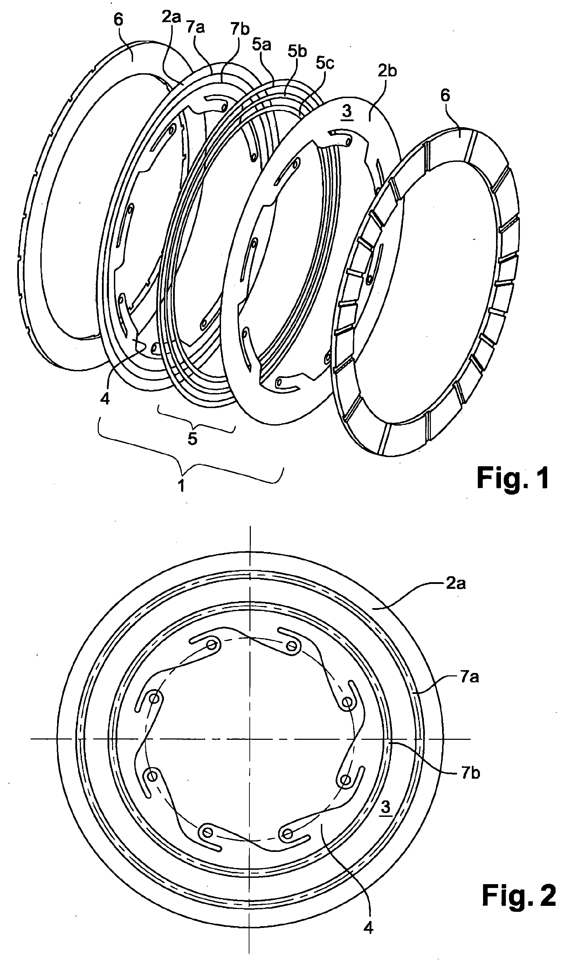

La figure 1 représente un ensemble comportant deux garnitures de friction 6 et un disque porte-garnitures 1 selon l'invention.

Le disque porte-garnitures 1 comporte deux éléments de support 2a, 2b métalliques sensiblement parallèles. Chaque élément de support 2a, 2b présente une portion périphérique annulaire 3 et des languettes de liaison 4 s'étendant radialement vers l'intérieur, agencées pour fixer ledit disque porte-garnitures 1, directement ou indirectement, au moyeu du disque d'embrayage, non représenté. Les languettes de liaison 4 sont flexibles afin d'autoriser le serrage des éléments de supports 2a, 2b l'un vers l'autre.

La portion périphérique annulaire 3 présente une face externe pour la réception d'une garniture de friction 6 et une face interne coopérant avec des moyens de progressivité 5. De préférence, les garnitures de friction 4 sont adhérisées, surmoulées ou agrafées sur la face externe de leur élément de support 2a, 2b respectif. Ainsi, la présence de rivets de fixation augmentant l'inertie du disque porte-garnitures 1 et diminuant l'épaisseur utile des garnitures 6 est évitée.

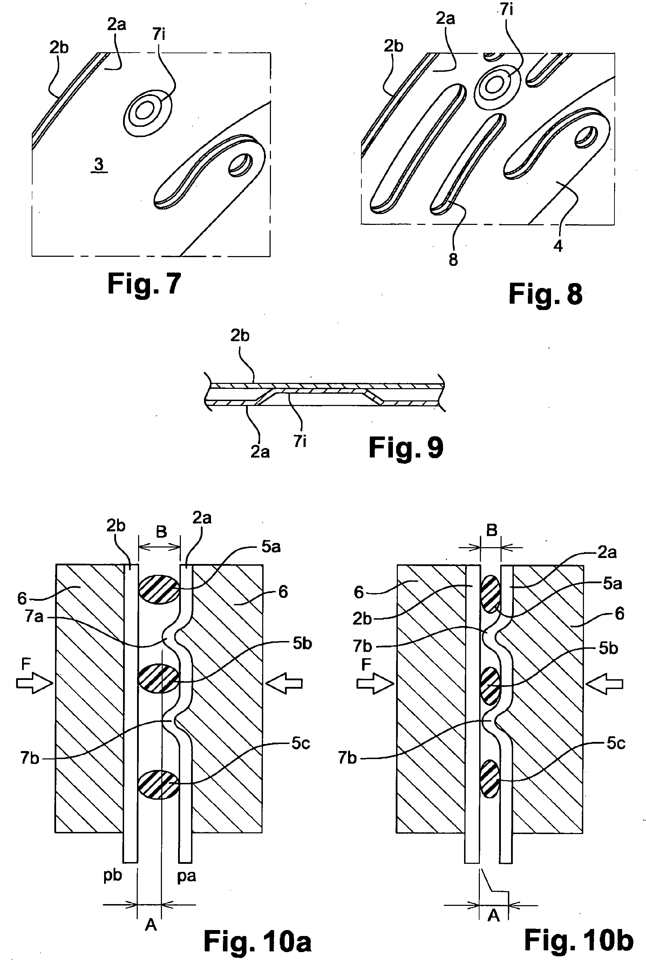

Les moyens de progressivité 5 sont en matériau élastomère et forment un ressort interposé entre les deux éléments de support 2a, 2b. Dans le mode de réalisation représenté, les moyens de progressivité 5 comportent trois cordons annulaires coaxiaux 5a, 5b, 5c collés sur les faces internes des éléments de support 2a, 2b. Les trois cordons annulaires 5a, 5b, 5c viennent en contact avec un plan de chacun des éléments de support 2a, 2b, que l'on appellera plan de contact des moyens de progressivité, référencé Pa et Pb sur la figure 10a.

Le matériau élastomère utilisé peut notamment être une silicone et est, de préférence, une silicone d'addition monocomposant. La silicone est, par exemple, du type polydimethylsiloxane contenant des groupements vinyliques. De tels moyens de progressivité sont notamment décrits dans la demande de brevet FR 2 887 605. On note, toutefois, que l'invention n'est pas limitée à ce mode de réalisation particulier et l'on pourra également prévoir des moyens de progressivité présentant d'autres formes et/ou constitués d'un autre matériau sans pour autant sortir du cadre de la présente invention.

Selon l'invention, au moins un élément de support 2a comprend, sur la face interne de sa portion périphérique annulaire, des moyens de butée 7 faisant saillie axialement, par rapport au plan Pa de contact des moyens de progressivité, vers l'autre élément de support 2b de sorte à limiter la course de serrage des éléments de support 2a, 2b.

Les figures 10a et 10b illustrent un disque porte-garnitures selon l'invention respectivement en position débrayée et embrayée et permettent de mieux comprendre le fonctionnement de l'invention.

En position débrayée, aucune charge axiale d'embrayage n'est appliquée sur les garnitures et les moyens de progressivité sont dans leur position de repos.

Lors de l'embrayage, les garnitures de friction 6 sont comprimées entre les plateaux de pression et de réaction et les moyens de progressivité 5 se déforment pour assurer la progressivité de l'accouplement. Afin d'assurer une protection des moyens de progressivité 5, les moyens de butée 7a, 7b d'au moins un des éléments de support 2a, 2b viennent en contact avec l'autre élément de support 2b.

Les moyens de butée 7a, 7b sont agencés pour intervenir avant que la compression des moyens de progressivité 5 atteigne une valeur seuil de déformation rémanente à la compression au-delà de laquelle les moyens de progressivité 5 présentent de manière irréversible une déformation résiduelle lorsqu'ils retournent à leur position de repos.

A titre d'exemple, le seuil de déformation rémanente à la compression du silicone est de l'ordre de 50 %. Ainsi, selon l'invention, afin de s'assurer que le seuil de déformation rémanente ne soit pas atteint, on prévoit que les moyens de butée soient aptes à limiter la course de serrage en dessous de 35 % de l'épaisseur axiale des moyens de progressivité en position de repos, lorsque la charge nominale de l'embrayage est atteinte. De préférence, les moyens de butées entrent en contact avec l'élément de support 2a, 2b opposé pour une course de serrage qui est comprise entre 20% et 35 % de l'épaisseur axiale des moyens de progressivité 5. Cette limitation de la course de serrage permet en outre d'utiliser les moyens de progressivité en silicone dans une plage de fonctionnement particulièrement intéressante dans laquelle la déformation en fonction de la pression est sensiblement linéaire.

Bien évidemment, les moyens de butée 5a, 5b présentent une raideur supérieure à celle des moyens de progressivité 5. A titre d'exemple, les moyens de butée 5a, 5b sont agencés pour générer une raideur en compression axiale du disque porte-garnitures supérieure à 30000 kN/m, et de préférence supérieure à 50000 kN/m.

Dans les modes de réalisation représentés sur les figures 1 et 2, les moyens de butée sont constitués par des rainures annulaires coaxiales 7a, 7b radialement réparties sur la portion périphérique annulaire 3 de l'élément de support 2a. Ces rainures annulaires 7a, 7b sont continues et sont formées, de matière, par déformation des éléments de support 2a, 2b. Ces rainures 7a, 7b sont, par exemple, réalisées par emboutissage ou galetage. Les deux rainures annulaires 7a, 7b sont chacune positionnées entre deux cordons annulaires de silicone successifs 5a, 5b, 5c. De tels moyens de butée 7a, 7b forment également des moyens de rigidification axiale et circonférentielle de l'élément de support 2a.

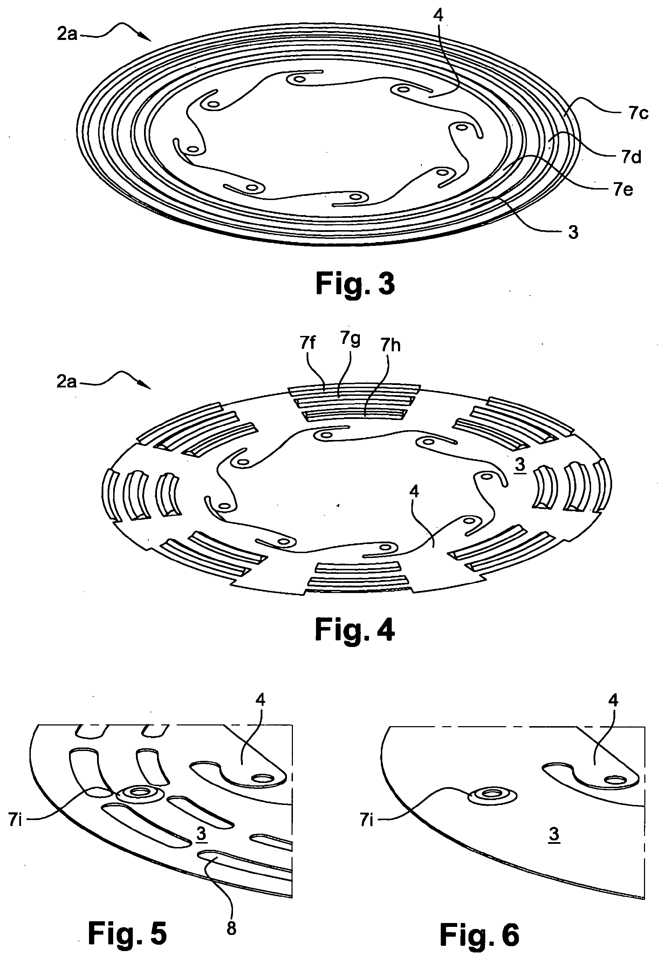

Dans le mode de réalisation de la figure 3, les moyens de butée sont constitués de trois rainures annulaires 7c, 7d, 7e coaxiales. Dans ce cas, chacune des rainures annulaires 7c, 7d, 7e est positionnée radialement à l'extérieur d'un des cordons de silicone 5a, 5b, 5c.

Dans le mode de réalisation de la figure 4, les moyens de butée sont constitués de segments annulaires 7f, 7g, 7h régulièrement répartis sur la périphérie de l'élément de support 2a.

Sur les figures 5 et 6, les moyens de butées sont constitués de plots 7i régulièrement répartis sur le pourtour d'un élément de support 2a. Les plots 7i sont formés par emboutissage de l'élément de support 2a.

Les éléments de support 2a, 2b peuvent être pourvues ou non de fentes 8, telles que représentées sur les figures 5 et 8. De telles fentes 8 permettent d'obtenir une meilleure homogénéité de pincement des moyens de progressivité 5.

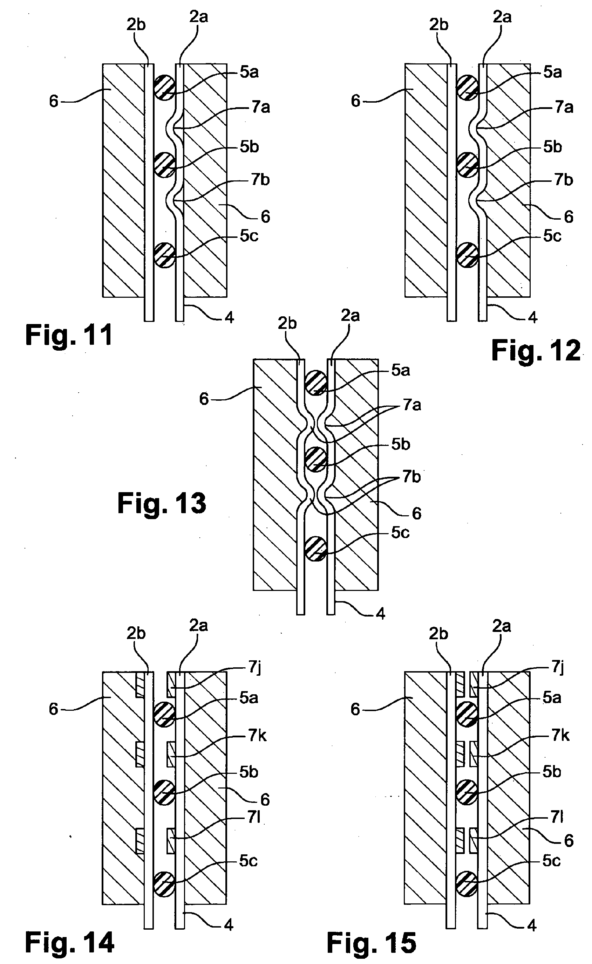

Bien évidemment, les garnitures de friction 6 peuvent être adhérisées ou agrafées sur les éléments de support 2a, 2b, tel que représenté sur la figure 11, ou surmoulés sur les éléments de support 2a, 2b tel que représenté sur la figure 12. Lorsque la garniture 6 est surmoulée, les rainures annulaires 7a, 7b de butée sont alors remplies de matériau de friction. Un tel mode de réalisation permet notamment d'augmenter la rigidité de la butée ainsi réalisée.

Dans le mode de réalisation de la figure 13, chacun des éléments de support 2a, 2b présente des éléments de butée 7a, 7b faisant saillie axialement vers l'autre élément de support 2b, 2a. Les éléments de butée 7a, 7b de chacun de supports 2a, 2b sont ici disposés en vis-à-vis et viennent en contact les uns contre les autres à pleine charge de l'embrayage.

Enfin, dans les modes de réalisation des figures 14 et 15, les moyens de butées sont constitués d'éléments rapportés 7j, 7k, 7l contre la surface interne d'au moins un élément de support 2a, 2b. Ces éléments rapportés 7j, 7k, 7l peuvent notamment être en acier ou en élastomère et être assemblés à l'élément de support 2a, 2b par collage ou par soudage. Les éléments rapportés 7j, 7k, 7l peuvent également présenter une forme de plot, une forme annulaire ou de segment annulaire.

Dans un mode de réalisation non illustré de l'invention, il est avantageux que les moyens de butée répartis radialement présentent des épaisseurs axiales différentes, l'épaisseur axiale des moyens de butée disposés à l'extérieur de la portion périphérique annulaire étant supérieure à l'épaisseur axiale des moyens de butée disposés vers l'intérieur de ladite portion périphérique annulaire 3. Une telle disposition des moyens de butée permet notamment d'améliorer l'adaptation des garnitures à la géométrie des contre matériaux. En effet, les contre matériaux du plateau de pression et du plateau de réaction sont soumis à des dilatations différentes qui se traduisent par une mise en cône convexe de ceux-ci, la face frottante des contre matériaux étant en retrait sur son diamètre extérieur. Ainsi, en prévoyant des moyens de butée extérieurs présentant une épaisseur axiale supérieure à celle des moyens de butée intérieurs, la pression de serrage des garnitures est répartie de manière homogène malgré la mise en cône des contre matériaux.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Disque porte-garnitures (1) pour disque d'embrayage comportant :
- deux éléments de support (2a, 2b) parallèles comprenant :
• une portion périphérique annulaire (3) présentant une face externe de réception d'une garniture de friction (6) et une face interne coopérant avec des moyens de progressivité (5a, 5b, 5c) ; et
• des moyens (4) de liaison au disque d'embrayage, s'étendant radialement vers l'intérieur ;
- des moyens de progressivité (5) en matière élastomère, formant ressort, interposés entre les faces internes des portions périphériques annulaires (3);
- au moins l'un des éléments de support (2a, 2b) présentant sur la face interne de sa portion périphérique annulaire (3) des moyens de butée (7a, 7b, 7c, 7d, 7e, 7f, 7g, 7h, 7i, 7j, 7k, 7l) faisant saillie axialement vers l'autre élément de support (2b, 2a) de sorte à limiter la course de serrage des éléments de support (2a, 2b) l'un vers l'autre, le disque porte-garnitures (1) étant **caractérisé en ce que** les moyens de butée (7a, 7b, 7c, 7d, 7e, 7f, 7g, 7h, 7i, 7j, 7k, 7l) sont agencés pour limiter la compression des moyens de progressivité (5) au dessus de leur seuil de déformation rémanente.

2. Disque porte-garnitures (1) selon la revendication 1 dans lequel les moyens de butée (7a, 7b, 7c, 7d, 7e, 7f, 7g, 7h, 7j, 7k, 7l) forment également des moyens de rigidification axiale et circonférentielle desdits éléments de support (2a, 2b).

3. Disque porte-garnitures (1) selon la revendication 2, dans lequel les moyens de butées (7a, 7b, 7c, 7d, 7e, 7f, 7g, 7h, 7i, 7j, 7k, 7l) sont aptes à entrer en contact pour une course de serrage comprise entre 25 et 35 % de l'épaisseur axiale des moyens de progressivité (5).

4. Disque porte-garnitures (1) selon l'une quelconque des revendications 1 à 3, dans lequel les moyens de butées (7a, 7b, 7c, 7d, 7e, 7f, 7g, 7h, 7i, 7j, 7k, 7l) sont agencés pour générer une raideur en compression axiale du disque porte-garnitures (1) supérieure à 30000 kN/m.

5. Disque porte-garnitures (1) selon l'une des revendications 1 à 4, dans lequel chaque élément de support (2a, 2b) présente sur sa face interne des moyens de butée (7a, 7b, 7c, 7d, 7e, 7f, 7g, 7h, 7i, 7j, 7k, 7l) faisant saillie axialement vers l'autre élément de support (2b, 2a), lesdits moyens de butée (7a, 7b, 7c, 7d, 7e, 7f, 7g, 7h, 7i, 7j, 7k, 7l) de chacun des éléments de support (2a, 2b) étant disposés en vis-à-vis.

6. Disque porte-garnitures (1) selon l'une quelconque des revendications 1 à 5, dans lequel les moyens de butée (7a, 7b, 7c, 7d, 7e, 7f, 7g, 7h, 7i) sont formés par déformation des éléments de support (2a, 2b).

7. Disque porte-garnitures (1) selon l'une quelconque des revendications 1 à 5, dans lequel les moyens de butée (7j, 7k, 7l) sont des éléments rapportés contre la surface interne d'au moins un élément de support (2a, 2b).

8. Disque porte-garnitures (1) selon l'une quelconque des revendications 1 à 7, dans lequel les moyens de butée (7i) sont formés par des plots régulièrement répartis sur la circonférence de la portion périphérique annulaire (3) d'au moins un élément de support (2a, 2b).

9. Disque porte-garnitures (1) selon l'une quelconque des revendications 1 à 7, dans lequel les moyens de butées sont formés par une pluralité d'éléments annulaires (7a, 7b, 7c, 7d, 7e, 7j, 7k, 7l) ou de segments annulaires (7f, 7g, 7h) de butée radialement répartis.

10. Disque porte-garnitures (1) selon l'une quelconque des revendications 1 à 9, dans lequel les moyens de progressivité (5) comprennent une pluralité de cordon circulaires coaxiaux (5a, 5b, 5c).

11. Disque porte-garnitures (1) selon la revendication 8 lorsqu'elle dépend de la revendication 9, dans lequel les moyens de progressivité (5a, 5b, 5c) comprennent une pluralité de cordons circulaires coaxiaux (5a, 5b, 5c) s'étendant radialement entre deux éléments annulaires (7a, 7b, 7c, 7d, 7e, 7j, 7k, 7l) ou deux segments annulaire (7f, 7g, 7h) de butée adjacents.

12. Disque d'embrayage comportant un moyeu destiné à être couplé en rotation à un arbre d'entrée d'une boîte de vitesse et au moins un disque porte-garnitures (1) selon l'une des revendications 1 à 11 fixé sur ledit moyeu

13. Embrayage pour véhicule automobile comportant :
- un plateau de réaction destiné à être relié directement ou indirectement au vilebrequin du moteur du véhicule,
- un plateau de pression ;
- un disque d'embrayage selon la revendication 12, placé entre le plateau de réaction et le plateau de pression; et
- un mécanisme d'embrayage comportant un couvercle relié au plateau de réaction et des moyens mécaniques d'embrayage et de débrayage sollicitant axialement le plateau de pression afin de serrer les garnitures du disque de friction entre le plateau de réaction et le plateau de pression en position embrayée et libérer le plateau de pression en position débrayée.

## Patentansprüche

1. Reibbeläge tragende Scheibe (1) für eine Kupplungsscheibe, welche aufweist:
- zwei parallele Stützelemente (2a, 2b), welche umfassen:
• einen ringförmigen Umfangsabschnitt (3), der eine Außenseite zur Aufnahme eines Reibbelages (6) und eine Innenseite, die mit Progressivitätsmitteln (5a, 5b, 5c) zusammenwirkt, aufweist; und
• Mittel (4) zur Verbindung mit der Kupplungsscheibe, die sich radial nach innen erstrecken;
- Progressivitätsmittel (5) aus elastomerem Material, die eine Feder bilden und zwischen den Innenseiten der ringförmigen Umfangsabschnitte (3) angeordnet sind;
- wobei wenigstens eines der Stützelemente (2a, 2b) auf der Innenseite seines ringförmigen Umfangsabschnitts (3) Anschlagmittel (7a, 7b, 7c, 7d, 7e, 7f, 7g, 7h, 7i, 7j, 7k, 71) aufweist, die axial in Richtung des anderen Stützelements (2b, 2a) vorspringen, derart, dass sie den Spannweg der Stützelemente (2a, 2b) zueinander hin begrenzen, wobei die Reibbeläge tragende Scheibe (1) **dadurch gekennzeichnet ist, dass** die Anschlagmittel (7a, 7b, 7c, 7d, 7e, 7f, 7g, 7h, 7i, 7j, 7k, 71) dazu eingerichtet sind, das Zusammendrücken der Progressivitätsmittel (5) oberhalb ihres Schwellenwertes der bleibenden Verformung zu begrenzen.

2. Reibbeläge tragende Scheibe (1) nach Anspruch 1, wobei die Anschlagmittel (7a, 7b, 7c, 7d, 7e, 7f, 7g, 7h, 7j, 7k, 71) außerdem Mittel zur axialen und in Umfangsrichtung wirkenden Versteifung der Stützelemente (2a, 2b) bilden.

3. Reibbeläge tragende Scheibe (1) nach Anspruch 2, wobei die Anschlagmittel (7a, 7b, 7c, 7d, 7e, 7f, 7g, 7h, 7i, 7j, 7k, 71) geeignet sind, für einen Spannweg, der zwischen 25 und 35 % der axialen Dicke der Progressivitätsmittel (5) liegt, in Kontakt zu kommen.

4. Reibbeläge tragende Scheibe (1) nach einem der Ansprüche 1 bis 3, wobei die Anschlagmittel (7a, 7b, 7c, 7d, 7e, 7f, 7g, 7h, 7i, 7j, 7k, 71) dazu eingerichtet sind, eine axiale Kompressionssteifigkeit der Reibbeläge tragenden Scheibe (1) zu erzeugen, die größer als 30000 kN/m ist.

5. Reibbeläge tragende Scheibe (1) nach einem der Ansprüche 1 bis 4, wobei jedes Stützelement (2a, 2b) auf seiner Innenseite Anschlagmittel (7a, 7b, 7c, 7d, 7e, 7f, 7g, 7h, 7i, 7j, 7k, 71) aufweist, die axial in Richtung des anderen Stützelements (2b, 2a) vorspringen, wobei die Anschlagmittel (7a, 7b, 7c, 7d, 7e, 7f, 7g, 7h, 7i, 7j, 7k, 71) jedes der Stützelemente (2a, 2b) gegenüberliegend angeordnet sind.

6. Reibbeläge tragende Scheibe (1) nach einem der Ansprüche 1 bis 5, wobei die Anschlagmittel (7a, 7b, 7c, 7d, 7e, 7f, 7g, 7h, 7i) durch Verformung der Stützelemente (2a, 2b) gebildet sind.

7. Reibbeläge tragende Scheibe (1) nach einem der Ansprüche 1 bis 5, wobei die Anschlagmittel (7j, 7k, 71) Elemente sind, die an der Innenfläche wenigstens eines Stützelements (2a, 2b) angebracht sind.

8. Reibbeläge tragende Scheibe (1) nach einem der Ansprüche 1 bis 7, wobei die Anschlagmittel (7i) von Kontaktstücken gebildet werden, die gleichmäßig auf dem Umfang des ringförmigen Umfangsabschnitts (3) wenigstens eines Stützelements (2a, 2b) verteilt sind.

9. Reibbeläge tragende Scheibe (1) nach einem der Ansprüche 1 bis 7, wobei die Anschlagmittel von mehreren ringförmigen Anschlagelementen (7a, 7b, 7c, 7d, 7e, 7j, 7k, 71) oder von ringförmigen Anschlagsegmenten (7f, 7g, 7h) gebildet werden, die radial verteilt sind.

10. Reibbeläge tragende Scheibe (1) nach einem der Ansprüche 1 bis 9, wobei die Progressivitätsmittel (5) mehrere koaxiale kreisförmige Wulste (5a, 5b, 5c) aufweisen.

11. Reibbeläge tragende Scheibe (1) nach Anspruch 8, wenn abhängig von Anspruch 9, wobei die Progressivitätsmittel (5a, 5b, 5c) mehrere koaxiale kreisförmige Wulste (5a, 5b, 5c) aufweisen, die sich radial zwischen benachbarten zwei ringförmigen Anschlagelementen (7a, 7b, 7c, 7d, 7e, 7j, 7k, 71) oder zwei ringförmigen Anschlagsegmenten (7f, 7g, 7h) erstrecken.

12. Kupplungsscheibe, welche eine Nabe, die dazu bestimmt ist, drehbar mit einer Eingangswelle eines Getriebes gekoppelt zu werden, und wenigstens eine Reibbeläge tragende Scheibe (1) nach einem der Ansprüche 1 bis 11, die auf dieser Nabe befestigt ist, aufweist.

13. Kupplung für ein Kraftfahrzeug, welche aufweist:
- eine Gegendruckplatte, die dazu bestimmt ist, direkt oder indirekt mit der Kurbelwelle des Kraftfahrzeugs verbunden zu werden,
- eine Anpressplatte;
- eine Kupplungsscheibe nach Anspruch 12, die zwischen der Gegendruckplatte und der Anpressplatte angeordnet ist; und
- einen Kupplungsmechanismus, der eine mit der Gegendruckplatte verbundene Abdeckung und mechanische Einrück- und Ausrückmittel, welche die Anpressplatte axial beaufschlagen, um in der eingerückten Position die Beläge der Reibscheibe zwischen der Gegendruckplatte und der Anpressplatte festzuklemmen und in der ausgerückten Position die Anpressplatte freizugeben, aufweist.

## Claims

1. Lining-carrier disc (1) for a clutch disc comprising:
- two parallel support elements (2a, 2b) comprising:
• an annular peripheral portion (3) having an outer face for receiving a friction lining (6) and an inner face cooperating with progressiveness means (5a, 5b, 5c); and
• means (4) for connection to the clutch disc that extend radially inwards;
- progressiveness means (5) of elastomer material, forming a spring, interposed between the inner faces of the annular peripheral portions (3);
- at least one of the support elements (2a, 2b) having, on the inner face of its annular peripheral portion (3), abutment means (7a, 7b, 7c, 7d, 7e, 7f, 7g, 7h, 7i, 7j, 7k, 71) projecting axially towards the other support element (2b, 2a) so as to limit the clamping travel of the support elements (2a, 2b) towards one another, the lining-carrier disc (1) being **characterized in that** the abutment means (7a, 7b, 7c, 7d, 7e, 7f, 7g, 7h, 7i, 7j, 7k, 71) are arranged to limit the compression of the progressiveness means (5) above their remanent deformation threshold.

2. Lining-carrier disc (1) according to Claim 1, in which the abutment means (7a, 7b, 7c, 7d, 7e, 7f, 7g, 7h, 7i, 7j, 7k, 71) also form means for the axial and circumferential stiffening of the said support elements (2a, 2b).

3. Lining-carrier disc (1) according to Claim 2, in which the abutment means (7a, 7b, 7c, 7d, 7e, 7f, 7g, 7h, 7i, 7j, 7k, 71) are able to come into contact for a clamping travel of between 25 and 35% of the axial thickness of the progressiveness means (5).

4. Lining-carrier disc (1) according to any one of Claims 1 to 3, in which the abutment means (7a, 7b, 7c, 7d, 7e, 7f, 7g, 7h, 7i, 7j, 7k, 71) are arranged to generate an axial compression stiffness of the lining-carrier disc (1) of greater than 30 000 kN/m.

5. Lining-carrier disc (1) according to one of Claims 1 to 4, in which each support element (2a, 2b) has, on its inner face, abutment means (7a, 7b, 7c, 7d, 7e, 7f, 7g, 7h, 7i, 7j, 7k, 71) projecting axially towards the other support element (2b, 2a), the said abutment means (7a, 7b, 7c, 7d, 7e, 7f, 7g, 7h, 7i, 7j, 7k, 71) of each of the support elements (2a, 2b) being arranged opposite one another.

6. Lining-carrier disc (1) according to any one of Claims 1 to 5, in which the abutment means (7a, 7b, 7c, 7d, 7e, 7f, 7g, 7h, 7i) are formed by deformation of the support elements (2a, 2b).

7. Lining-carrier disc (1) according to any one of Claims 1 to 5, in which the abutment means (7j, 7k, 71) are elements which are added on against the inner surface of at least one support element (2a, 2b).

8. Lining-carrier disc (1) according to any one of Claims 1 to 7, in which the abutment means (7i) are formed by studs uniformly distributed over the circumference of the annular peripheral portion (3) of at least one support element (2a, 2b).

9. Lining-carrier disc (1) according to any one of Claims 1 to 7, in which the abutment means are formed by a plurality of radially distributed annular abutment elements (7a, 7b, 7c, 7d, 7e, 7j, 7k, 71) or annular abutment segments (7f, 7g, 7h).

10. Lining-carrier disc (1) according to any one of Claims 1 to 9, in which the progressiveness means (5) comprise a plurality of coaxial circular strips (5a, 5b, 5c).

11. Lining-carrier disc (1) according to Claim 8 when it is dependent on Claim 9, in which the progressiveness means (5a, 5b, 5c) comprise a plurality of coaxial circular strips (5a, 5b, 5c) extending radially between two adjacent annular abutment elements (7a, 7b, 7c, 7d, 7e, 7j, 7k, 71) or two annular abutment segments (7f, 7g, 7h).

12. Clutch disc comprising a hub intended to be coupled in rotation to an input shaft of a gearbox and at least one lining-carrier disc (1) according to one of Claims 1 to 11 fixed to the said hub.

13. Clutch for a motor vehicle comprising:
- a reaction plate intended to be connected directly or indirectly to the crankshaft of the engine of the vehicle,
- a pressure plate;
- a clutch disc according to Claim 12, placed between the reaction plate and the pressure plate; and
- a clutch mechanism comprising a cover connected to the reaction plate and mechanical clutch-engagement and clutch-disengagement means acting axially on the pressure plate in order to clamp the linings of the friction disc between the reaction plate and the pressure plate in the engaged position and to release the pressure plate in the disengaged position.
